# EUROPÄISCHE PATENTANMELDUNG

(11) **EP 0 986 956 A1**
(43) Veröffentlichungstag der Anmeldung: **22.03.2000**
(21) Anmeldenummer: 99118191.8
(22) Anmeldetag: 13.09.1999
(51) Int. Cl.: A22C 9/00, A47J 47/00

(54) **Küchenklopfbrett**

(30) Priorität: 15.09.1998 CZ 847698
(71) Anmelder: Frajman, Oleg, 563 01 Lanskroun (CZ)
(72) Erfinder: Frajman, Oleg, 563 01 Lanskroun (CZ)
(74) Vertreter: Dusil, Vladimir, Dipl.-Ing.

(57) **Zusammenfassung**

Es wird ein Küchenklopfbrett insbesondere zur Zubereitung von Fleisch vorgeschlagen, das beispielsweise als ein Kunsstoffpreßteil ausgeführt werden kann.

Um eine gleichmäßige Bearbeitung des zuzubereitenden Fleisches mittels eines geformten Fleischklopfers zu ermöglichen ist die Oberfläche einer Brettgrundplatte (1) mit im Abstand voneinander angeordneten Spitzen (2) versehen, deren Höhe den Brettrand nicht übersteigt. Zwischen dem Brettrand und den Spitzen (2) ist vorzugsweise eine Abtropfrille (4) vorgesehen.

## Beschreibung

### Technikbereich

Die technische Lösung betrifft die Küchenklopfbretter, insbesondere bei der Zubereitung von Fleisch.

### Bisheriger Technikstand

Die bisher bekannten Lösungen von Küchenklopfbrettern sind meist aus Holz. In der letzten Zeit fängt man an, sie auch aus Kunststoffen herzustellen. All diese Ausführungen beruhen aber auf der geraden Brettfläche, auf die das mürbe zu klopfende Fleisch gelegt wird und mit einem geformten Fleischklopfer, dessen Klopffläche mit Spitzen versehen ist, das Fleisch insofern verarbeitet wird, damit seine Struktur gelöst wird, es weich wird und seine Form ausgerichtet wird. Die Brettfläche ist jedoch immer glatt, aus Benutzungsgründen auch für andere Zwecke.

### Der Inhalt der technischen Lösung

Die vorgenannten Mängel werden in beträchtlichem Maße, insbesondere bei der Fleischzubereitung, durch das Küchenklopfbrett entsprechend dieser technischen Lösung behoben, deren Wesen darin liegt, daß die Brettgrundplatte auf der oberen Fläche mit Spitzen und Spalten zwecks Reinigung versehen ist, deren Köpfe, von der Höhe aus, den Brettrand nicht übersteigen, wobei zwischen den Spitzen und dem Brettrand eine Abtropfrille geformt ist.
Mit dem Brett, laut dieser technischen Lösung, wird die Fleischzubereitung beim Klopfen insofern vereinfacht, daß das Fleisch auf diese Spitzen gelegt und durch Klopfen mit einem geformten Fleischklopfer gleichzeitig und gleichmäßig von beiden Seiten bearbeitet wird.
Für eine richtige Funktion ist es von Vorteil, daß die Brettspitzen mit den Stumpfpyramiden aus quadratischen Grundflächen geformt sind, deren Kopfwinkel ungefähr 90° beträgt, wobei sich zwischen deren Grundflächen Spalten für eine einfache Reinigung befinden. Die obere Fläche dieser Spitzen sollte relativ klein sein, damit die Spitzeneinwirkung möglichst groß ist, aber wiederum nicht zu intensiv, damit das Zerreißen und die Zerstörung des Fleisches nicht zustande kommen. Die Abtropfrille am Brettrand nimmt die Fleischsäfte auf, damit diese nicht auf die Arbeitsfläche herabrinnen und das Umfeld nicht verunreinigen.

Zur Zeit ist es möglich, dieses Brett ebenfalls vorteilhaft als ein Kunststoffpreßteil herzustellen, sodaß es leicht abwaschbar und hygienisch unbedenklich ist.

### Übersicht der Abbildungen auf der Zeichnung

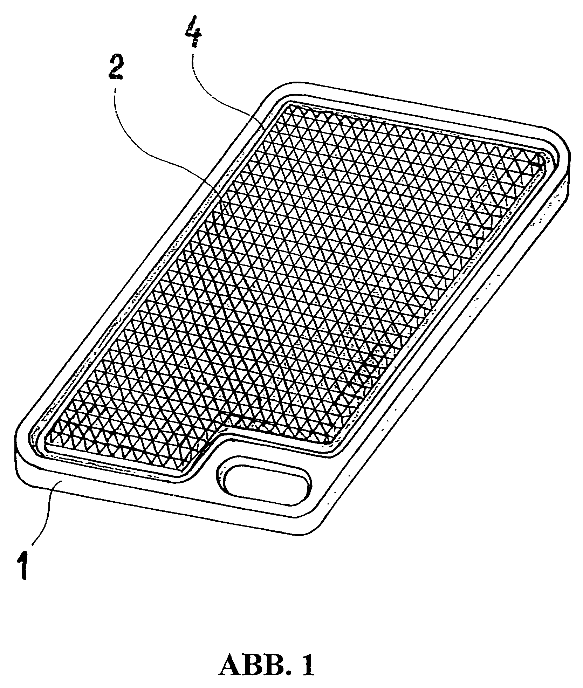

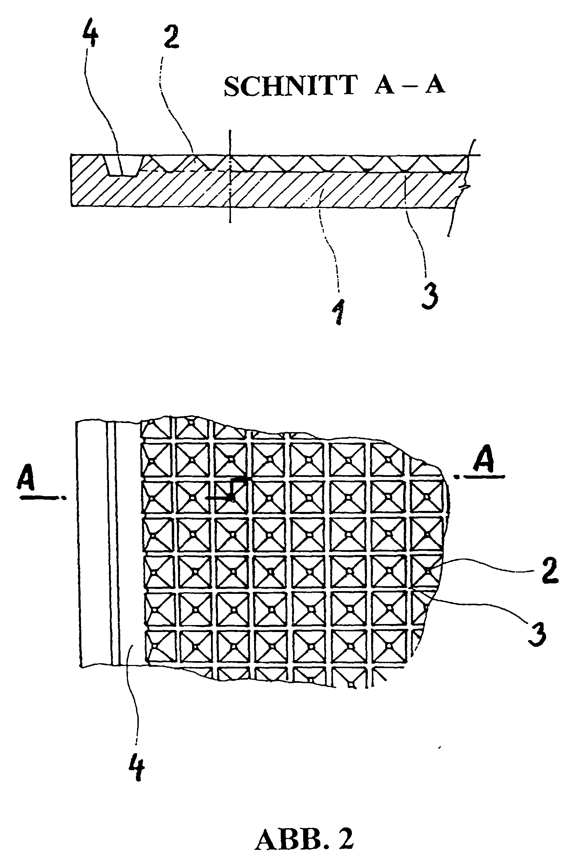

Die technische Lösung wird mit Hilfe der Zeichnungen näher erläutert, auf denen die Abbildung 1 einen axonometrischen Blick auf das Küchenklopfbrett darstellt, laut technischer Lösung in rechteckiger Form und mit einem Handgriff ungefähr im Maßstab 2 : 5. Auf Abb. 2 ist der Schnitt A ― A, aus dem die Form von Spitzen und die Abtropfrillen sowie der Grundrißblick auf ein Bretteil zur Darstellung von Spalten zwischen den Spitzen ersichtlich sind.

### Beispiel für die Ausführung der technischen Lösung

Das Küchenklopfbrett besteht nach der Abbildung 1 aus einer Grundplatte 1, auf deren oberen Fläche die Spitzen 2 in Form von Stumpfpyramiden mit quadratischer Grundfläche in einem Kopfwinkel von ungefähr 90° geformt sind, deren Köpfe von der Höhe aus den Brettrand nicht übersteigen. Zwischen den Spitzen 2 sind die Spalten 3 für die einfache Reinigung sowie die Instandhaltung geformt. Zwischen dem Seitenbretteil und den Spitzen 2 ist dann noch eine Abtropfrille 4 zur Aufnahme von Säften aus dem zu verarbeitenden Fleisch vorgeformt, wie es aufder Abbildung 2 dargestellt ist.

Die Handhabung mit dem Küchenklopfbrett laut der technischen Lösung ist sehr einfach und beruht nur auf dem Hinlegen des Brettes mit der Grundplatte 1 auf den Arbeitstisch. Auf die Spitzen 2 ist das zu bearbeitende Fleisch zu legen. Durch das Klopfen mit einem geformten Fleischklopfer wird das Fleisch gleichzeitig und gleichmäßig von beiden Seiten bearbeitet, wobei der entstandene Fleischsaft durch die Spalten 3 in die Abtropfrille 4 abfließt.

### Industrielle Nutzbarkeit

Das Küchenklopfbrett, laut der technischen Lösung, kann in den Haushalten, aber insbesondere in größeren Küchen genutzt werden, wie in Restaurants, Betriebs- und Schulküchen und Krankenhäusern, wo größere Fleischmengen schnell und gut zu verarbeiten sind.

## Patentansprüche

1. Das Küchenklopfbrett **zeichnet sich dadurch aus,** insbesondere bei der Fleischzubereitung, daß die Brettgrundplatte (1) auf der oberen Fläche mit Spitzen (2) mit Spalten (3) für die Reinigung versehen ist, deren Köpfe von der Höhe aus den Brettrand nicht übersteigen, wobei zwischen den Spitzen (2) und dem Brettrand eine Abtropfrille (4) vorgeformt ist.
